(19) Europäisches Patentamt
European Patent Office
Office européen des brevets

(11) **EP 4 104 691 B1**

(12) **FASCICULE DE BREVET EUROPEEN**

(45) Date de publication et mention
de la délivrance du brevet:
**15.07.2026 Bulletin 2026/29**

(21) Numéro de dépôt: **22306036.9**

(22) Date de dépôt: **20.02.2015**

(51) Classification Internationale des Brevets (IPC):
**A24F 40/50** *(2020.01)* **G01N 27/18** *(2006.01)*

(52) Classification Coopérative des Brevets (CPC):
**A24F 40/50; G01N 27/18**

(54) **CIGARETTE ELECTRONIQUE**

ELEKTRONISCHE ZIGARETTE

ELECTRONIC CIGARETTE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **21.02.2014 FR 1451409**

(43) Date de publication de la demande:
**21.12.2022 Bulletin 2022/51**

(62) Numéro(s) de document de la (des) demande(s)
initiale(s) en application de l'article 76 CBE:
**15709290.9 / 3 108 223**

(73) Titulaire: **JT International S.A.**
**1202 Geneva (CH)**

(72) Inventeurs:
• LOUVEAU, Eric
06600 ANTIBES (FR)
• MALCAVET, Didier
83390 PUGET-VILLE (FR)
• ANAVI, Steve
75009 PARIS (FR)
• PROT, Alexandre
75002 PARIS (FR)

(74) Mandataire: **Lavoix**
**2, place d'Estienne d'Orves**
**75441 Paris Cedex 09 (FR)**

(56) Documents cités:
EP-A1- 2 143 346       EP-A1- 2 468 116
CA-A1- 2 641 869       US-A1- 2003 033 055
US-A1- 2013 104 916

**Description**

<u>Arrière-plan de l'invention</u>

L'invention se situe dans le domaine général des cigarettes électroniques comportant un élément chauffant apte à vaporiser un substrat en réponse aux inhalations de l'utilisateur, lorsque l'élément chauffant est alimenté.

Plus précisément, l'invention propose une solution pour permettre d'estimer la quantité de substrat vaporisée par l'élément chauffant.

On connaît des solutions qui visent à estimer cette quantité en mesurant la variation de la résistivité de l'élément chauffant lorsque la température de cet élément chauffant varie en raison des inhalations.

Le document EP 2 468 116 décrit en particulier une solution de ce type dans laquelle la résistivité d'un élément chauffant est calculée à partir de la différence de potentiels aux bornes de cet élément.

Le document EP 2 143 346 A1 décrit en particulier un système de capteur d'écoulement pour détecter l'écoulement d'un fluide indiquant une bouffée dans un système générateur d'aérosol.

Le document US 2003/033055 A1 divulgue un procédé et un dispositif pour vaporiser un liquide.

Malheureusement, la variation de la résistivité de l'élément chauffant est très difficile à mesurer de sorte que ces solutions ne permettent pas d'estimer la quantité de substrat vaporisée de façon précise.

<u>Objet et résumé de l'invention</u>

Selon un premier aspect, l'invention concerne une cigarette électronique telle que présentée dans le jeu de revendications annexé.

Dans ce document, la notion de « vaporisation » est à prendre au sens large ; elle désigne la transformation du substrat en gaz, y compris à une température inférieure à 100°C.

<u>Brève description des dessins</u>

D'autres caractéristiques et avantages de la présente invention ressortiront de la description faite ci-dessous, en référence aux dessins annexés qui en illustrent un exemple de réalisation dépourvu de tout caractère limitatif. Sur ces figures :

- la figure 1 représente un premier mode de réalisation d'une cigarette électronique conforme à l'invention ;

- la figure 2 représente la variation de tension aux bornes de différents composants de la cigarette électronique de la figure 1 suite à une inhalation ;

- la figure 3 représente la différence théorique entre les tensions de sortie de deux circuits RC de la figure 1, en l'absence d'inhalation ;

- la figure 4 illustre une méthode pour calculer une intensité d'inhalation dans la cigarette électronique de la figure 1

- la figure 5 représente des détails d'une cigarette électronique conforme à un deuxième mode de réalisation de l'invention;

- la figure 6 représente des détails d'une cigarette électronique selon un exemple qui ne fait pas partie de l'invention ;

- la figure 7 illustre une méthode pour calculer une intensité d'inhalation dans la cigarette électronique de la figure 6 ; et

- la figure 8 représente des détails d'une cigarette électronique selon un exemple qui ne fait pas partie de l'invention ;

- la figure 9 représente, sous forme d'organigramme, les principales étapes d'un procédé d'estimation selon un exemple qui ne fait pas partie de l'invention.

<u>Description détaillée d'un premier mode de réalisation de l'invention</u>

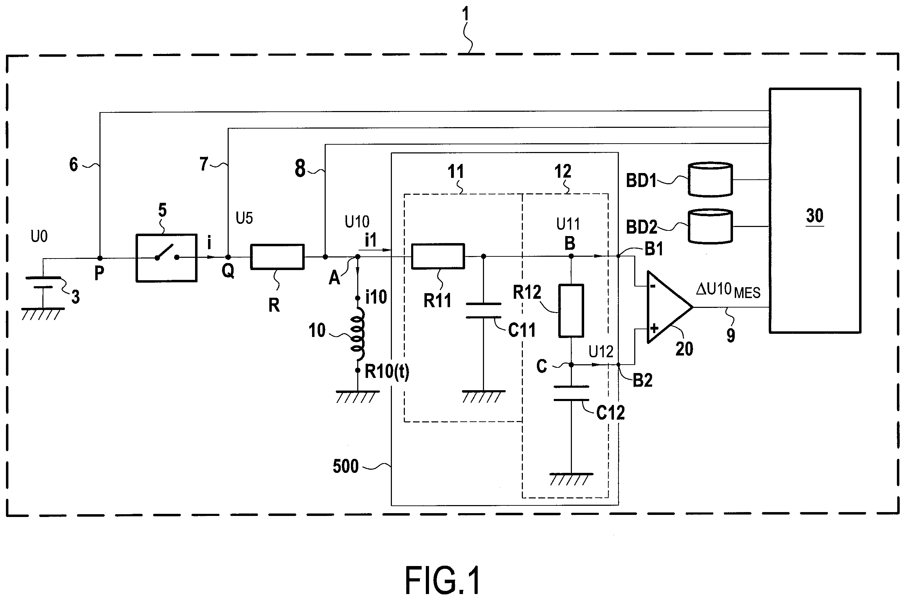

Nous allons maintenant décrire en référence à la figure 1 un premier mode de réalisation d'une cigarette électronique 1 conforme à l'invention, figure dans laquelle seuls les composants électroniques utiles à la compréhension de ce mode de réalisation ont été représentés.

La cigarette électronique 1 comporte un élément chauffant 10 apte à vaporiser un substrat, la résistivité R10(t) de cet élément chauffant étant susceptible de varier en fonction de sa température.

Dans ce mode de réalisation, l'élément chauffant 10 comporte une première borne non référencée reliée à la masse et une deuxième borne A, de sorte que le potentiel U10 de cette borne correspond à la tension aux bornes de l'élément chauffant 10.

Conformément à l'invention, la cigarette électronique 1 comporte une batterie 3 apte à délivrer une tension U0, et un interrupteur 5 connecté à une borne P de la batterie, pour alimenter, uniquement lorsque l'utilisateur appuie sur un bouton non représenté, l'élément chauffant 10 à partir de la batterie 3.

Dans le mode de réalisation décrit ici, la tension U0 présente une tension nominale de l'ordre de 3.7V et une courbe de décharge dans une plage [4.2V, 0V].

Lorsque l'interrupteur 5 est en position fermée, un courant électrique d'intensité i traverse cet interrupteur et un courant électrique d'intensité i10 traverse l'élément chauffant 10.

De manière à pouvoir mesurer les variations de la tension U10(t) aux bornes de l'élément chauffant 10, la cigarette électronique 1 comporte, dans ce mode de réalisation, une résistance de mesure R placée en série entre une borne Q de l'interrupteur 5 et la borne A de l'élément chauffant 10. La résistance de mesure est traversée par le courant électrique d'intensité i lorsque l'interrupteur 5 est en position fermée. Les caractéristiques intrinsèques de la résistance de mesure R ne sont pas perturbées par les inhalations.

Du fait de cet agencement particulier, et en considérant que l'interrupteur 5 est un interrupteur parfait (c'est-à-dire sans perte, donc avec U5 = U0), on obtient, de façon connue :

$$U10(t) = U0.R10(t)/(R+R10(t)) \qquad (1)$$

Par conséquent, les variations de la résistivité R10(t) de l'élément chauffant 10 s'accompagnent d'une variation de la tension U10(t) aux bornes de l'élément chauffant.

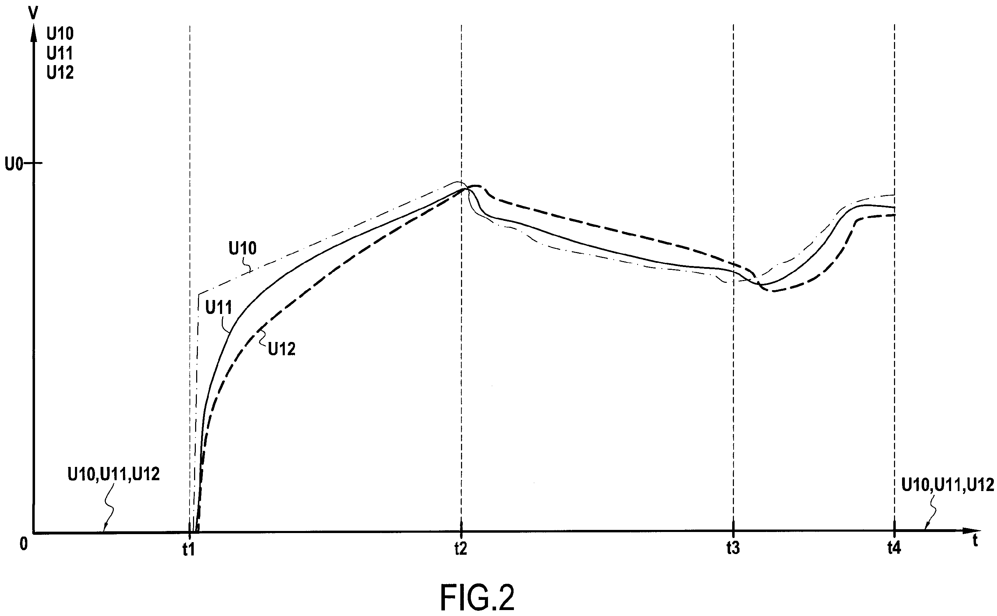

La figure 2 représente en ordonnée la tension U10(t) aux bornes de l'élément chauffant 10 en fonction du temps, figure sur laquelle quatre événements se produisant à des instants t1 à t4 ont été représentés :

- t1 : appui sur le bouton fermant l'interrupteur 5. La tension U10(t) aux bornes de l'élément chauffant 10 qui était nulle, atteint presque instantanément une tension très proche de la tension U0 de la batterie 3. A partir, de cet instant t1 et tant que l'utilisateur n'inhale pas, la température de l'élément chauffant 10 augmente jusqu'à atteindre une température limite, sa résistivité R10(t) augmente et la tension U10(t) augmente.

- t2 et t3 : début et arrêt de l'inhalation. L'inhalation amène un flux d'air froid sur l'élément chauffant 10 avec pour effet de baisser sa température, diminuer sa résistivité R10(t) et donc de baisser la tension U10(t) à ses bornes. Inversement, la fin de l'inhalation entraîne, si l'interrupteur 5 est maintenu fermé, un réchauffement de l'élément chauffant, et une augmentation de la tension à ses bornes.

- t4 : relâche du bouton et ouverture de l'interrupteur 5 : l'élément chauffant 10 n'est plus alimenté par la batterie 3 et la tension U10(t) à ses bornes redevient nulle presque instantanément.

Dans ce document, on appelle « période de fumage », la période de temps entre les instants t1 et t4, à savoir la période au cours de laquelle l'utilisateur appuie sur le bouton commandant l'interrupteur 5 en position fermée. Pendant cette période, l'utilisateur peut éventuellement ne pas inhaler ou inhaler une ou plusieurs bouffées.

Dans ce premier mode particulier de réalisation de l'invention, on estime la quantité de substrat vaporisée pendant une période de fumage en comparant une mesure $\Delta U10_{mes}(t)$ d'une approximation de la variation de la tension U10(t) aux bornes de l'élément chauffant 10 pendant cette période de fumage avec une estimation théorique $\Delta U10_{TH}(t)$ de cette approximation de cette variation de tension en l'absence de toute inhalation pendant la période de fumage.

Plus précisément, dans ce mode de réalisation de l'invention, on choisit, comme approximation de la variation de tension à l'instant t aux bornes de l'élément chauffant 10, la différence entre deux tensions U11(t) et U12(t) mesurées aux bornes B1, B2 d'un circuit 500 comprenant deux sous-circuits 11, 12 distincts et de même type, les tensions U11(t) et U12(t) aux bornes de ce circuit 500 étant des approximations de la tension U10(t) aux bornes de l'élément chauffant 10 à deux instants légèrement décalés dans le temps.

Il est fondamental de constater qu'aucun des composants du circuit 500 n'a de caractéristique intrinsèque perturbée par les inhalations.

Dans le mode de réalisation décrit ici, on utilise deux sous-circuits RC série 11, 12, placés en série entre l'élément chauffant 10 et des moyens 30 de calcul aptes à calculer la différence entre les tensions U11(t) et U12(t).

Dans le mode de réalisation décrit ici, les tensions U11(t) et U12(t) sont les potentiels des points B et C représentés à la figure 1.

La constante de temps T12 du deuxième circuit RC 12 est choisie largement supérieure à celle T11 du premier circuit RC 11, par exemple d'un facteur 100.

Dans le mode de réalisation décrit ici, on utilise un amplificateur 20 de gain G pour amplifier la différence ΔU10(t) entre U11(t) et U12(t).

Dans le mode de réalisation décrit ici, les résistances R11 et R12 des sous-circuits RC 11 et 12 sont négligeables par rapport à l'impédance de l'amplificateur 20.

Par conséquent,

$$\Delta U10(t) = G.(U12(t) - U11(t))$$

Dans le mode de réalisation décrit ici :

- le gain G est choisi dans la plage [100 ; 10000], par exemple égal à 500 ;

- la différence U12(t) - U11(t) est de l'ordre de quelques dizaines de microvolts ; et

- ΔU10(t) est de l'ordre de quelques dizaines voire centaines de microvolts et mesurable par les moyens de calcul 30.

Sur la figure 2, on a également représenté les tensions de sortie U11(t) et U12(t) des sous-circuits RC série 11 et 12.

Comme expliqué précédemment, lorsque l'utilisateur appuie sur le bouton à l'instant t1, l'élément chauffant 10 est alimenté et la tension U10(t) à ses bornes augmente. Les deux capacités C11, C12 des sous-circuits RC 11, 12 se chargent, la deuxième et plus importante capacité C12 étant en retard par rapport à la première et plus petite capacité 11. On observe par conséquent, entre l'appui sur le bouton (t1) et le début de l'inhalation (t2) que U12(t)<U11 (t)<U10(t).

Lorsque l'utilisateur commence à inhaler à l'instant t2, l'élément chauffant 10 se refroidit et la tension U10(t) à ses bornes diminue. La deuxième et plus importante capacité C12, est en retard par rapport à la première et plus petite capacité C11. On observe pendant toute la durée de l'inhalation, à savoir entre t2 et t3 que U12(t)>U11(t)>U10(t).

Lorsque l'utilisateur arrête d'inhaler à l'instant t3, l'élément chauffant 10 se réchauffe et la tension U10(t) à ses bornes augmente. On retrouve alors la situation dans laquelle U12(t)<U11(t)<U10(t).

Peu de temps après que l'utilisateur relâche le bouton à l'instant t4, la tension U10(t) redevient nulle, les capacités C11 et C12 se déchargent et leurs tensions de sortie U11(t), U12(t) redeviennent nulles.

De façon connue, on distingue, lorsqu'on applique une tension constante aux bornes d'une capacité, un régime transitoire au cours duquel la capacité se charge progressivement jusqu'à atteindre une charge limite fonction de sa valeur et un régime permanent durant lequel la charge de la capacité reste à cette valeur limite tant que l'on continue à lui appliquer cette tension constante.

La figure 2 correspond à la situation dans laquelle l'utilisateur commence à inhaler (instant t2) en régime permanent. L'homme du métier comprendra que si l'utilisateur commençait à inhaler pendant le régime transitoire, la grande capacité C12 n'étant pas entièrement chargée, la tension de sortie U12(t) de la deuxième capacité ne deviendrait pas nécessairement supérieure à la tension de sortie U11(t) de la première capacité.

Dans le mode de réalisation décrit ici, le système formé par les deux sous-circuits 11 et 12 est en régime transitoire pendant environ 800 ms après l'instant t1 auquel l'utilisateur appuie sur le bouton.

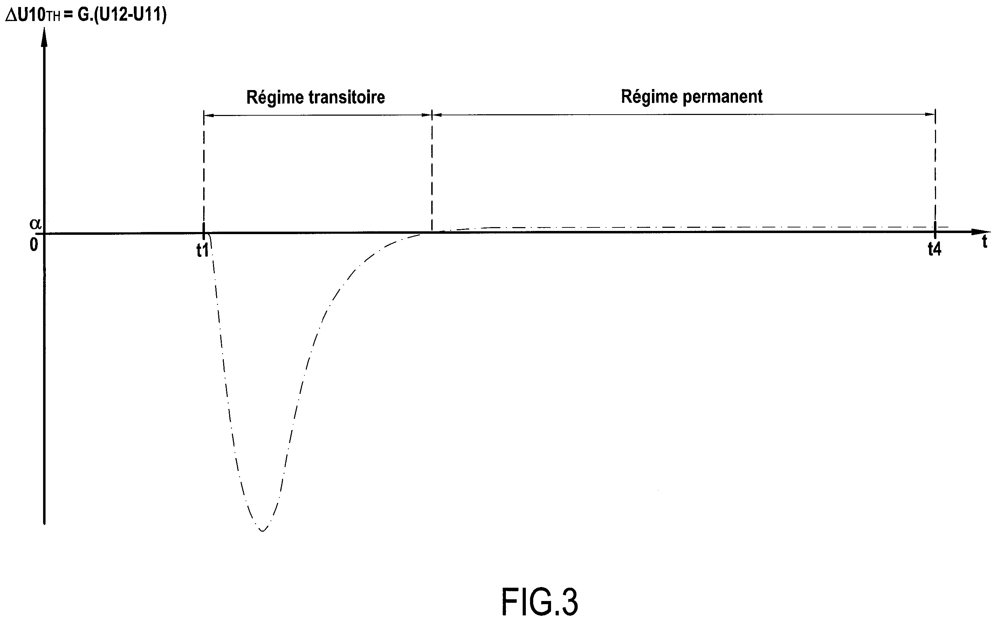

La figure 3, qui représente la différence ΔU10$_{TH}$(t) théorique entre les tensions de sortie U11(t) et U12(t) des deux sous-circuits RC 11, 12 en l'absence d'inhalation, autrement dit une approximation théorique de la variation de la tension U10(t) aux bornes de l'élément chauffant 10 à l'instant t, illustre ces différents régimes.

Pendant le régime transitoire, U12(t) est toujours inférieure à U11(t) mais comme représenté à la figure 2 la valeur absolue de la différence entre ces deux tensions augmente puis diminue jusqu'à atteindre une valeur constante α en régime permanent.

Dans le mode de réalisation décrit ici, cette constante α peut être négligée et supposée nulle par la suite.

En régime transitoire, et en notant :

- R11, la résistance du premier sous-circuit RC série 11 ;
- C11, la capacité du premier sous-circuit RC série 11 ;
- R12, la résistance du deuxième sous-circuit RC série 12 ;
- C12, la capacité du deuxième sous-circuit RC série 12 ;
- T11 la constante de temps R1.C1 du premier sous-circuit RC série 11 ; et
- T12 la constante de temps R2.C2 du deuxième sous-circuit RC série 12 ;

on obtient, de façon théorique :

$$U11_{TH}(t) = U10(t).(1 - \exp(-t/T11))$$

$$U12_{TH}(t) = U11_{TH}(t).(1- \exp(-t/T12))$$

$$\text{soit } U12_{TH}(t) = U10(t).(1 - \exp(-t/T11)).(I - \exp(-t/T12))$$

Par conséquent, la variation théorique $\Delta U10_{TH}(t)$ de la tension aux bornes de l'élément chauffant 10 s'exprime :

$$\Delta U10_{TH}(t) = G.(U11_{TH}(t) - U12_{TH}(t))$$

$$\text{soit } \Delta U10_{TH}(t) = G.U10(t).(1 - \exp(-t/T11)).(\exp(-t/T12))$$

ou encore avec (1)

$$\Delta U10_{TH}(t)= G.[U0.R10(t)/(R+R10(t))].(1-\exp(-t/T11))-(\exp(-t/T12))$$

En faisant l'approximation que R10(t) est constant pendant la période de fumage et égal à R10(t1), on obtient finalement l'expression de $\Delta U10_{TH}(t)$ :

- en régime transitoire :

$$\Delta U10_{TH}(t) = G.[U0.R10(t1)/(R+R10(t1))].(1 - \exp(-t/T11)).(\exp(-t/T12)) \qquad (2)$$

- en régime permanent :

$$\Delta U10_{TH}(t) = \alpha = 0.$$

Dans le mode de réalisation de la figure 1, l'approximation $\Delta U10_{MES}(t)$ de la variation de la tension U10(t) aux bornes de l'élément chauffant 10 est la tension de sortie des moyens d'amplification 20, à savoir le potentiel de la borne 9.

Dans le mode de réalisation décrit ici, la quantité de substrat vaporisée pendant une période de fumage est estimée à partir d'une intensité d'inhalation F calculée par intégration de la différence au cours d'une période de fumage, entre l'approximation $\Delta U10_{MES}(t)$ de la variation de la tension U10(t) aux bornes de l'élément chauffant 10 pendant cette période de fumage et l'estimation théorique $\Delta U10_{TH}(t)$ de cette approximation de cette variation de tension en l'absence de toute inhalation pendant la période de fumage.

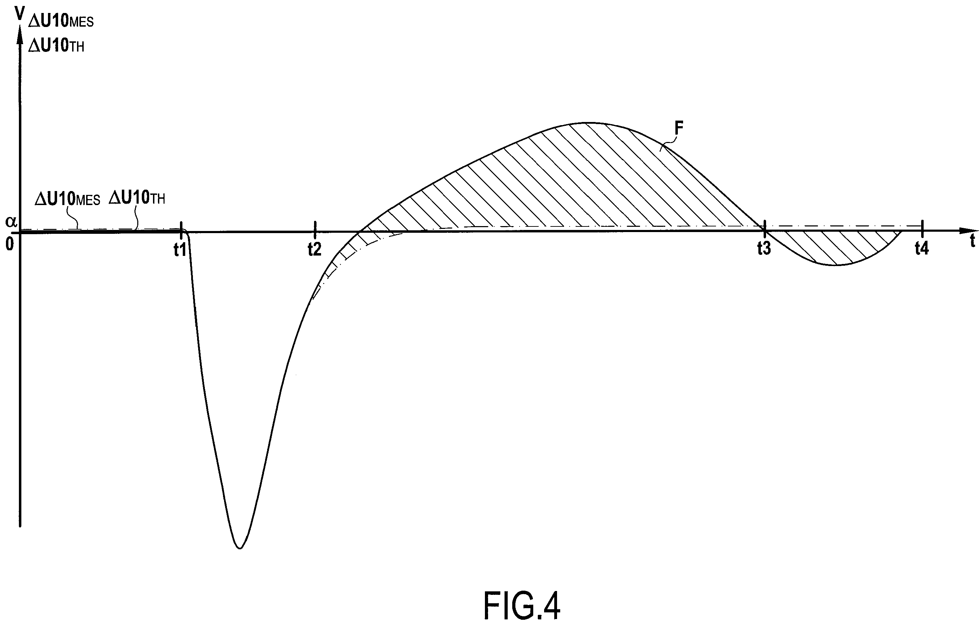

Cette intensité d'inhalation F correspond, dans l'exemple de réalisation décrit ici, à l'aire hachurée Figure 4. Cette aire peut notamment être calculée par une somme de Riemann avec un pas de 20ms entre les instants t2 et t4.

Dans l'exemple de réalisation décrit ici, t2 est déterminé comme étant l'instant où la valeur absolue de la différence $\Delta U10_{MES}(t)$ et $\Delta U10_{TH}(t)$ devient supérieure à un seuil $S_{T2}$ prédéterminé:

$$|\Delta U10_{MES}(t2) - \Delta U10_{TH}(t2)| > S_{T2}$$

L'instant t4 est l'instant où l'utilisateur relâche le bouton.

Pour calculer l'intensité d'inhalation F par la méthode de Riemann, on évalue et on mémorise $\Delta U10_{MES}(t)$ et $\Delta U10_{TH}(t)$, à différents instants entre t1 et t4, par exemple toutes les 20ms. Dans ce mode de réalisation :

1. $\Delta U10_{MES}(t)$ est la mesure du potentiel de la borne 9 à l'instant t

2. $\Delta \Delta U10_{TH}(t)$ entre t1 et t1+800ms (régime transitoire) est lue dans un enregistrement d'une première base de données BD1 construite lors de tests préliminaires effectuées en laboratoire et mémorisée dans la cigarette électronique 1, l'enregistrement étant sélectionné en fonction des paramètres de l'équation (2).

3. $\Delta U10_{TH}(t)= 0$, entre t1+800ms et t4 (régime permanent)

De retour à l'équation (2), l'expression de $\Delta U10_{TH}(t)$ en régime transitoire dépend de six paramètres, à savoir :

- le gain G de l'amplificateur 20 ;
- la tension U0 délivrée par la batterie 3 ;
- la résistivité R10(t1) de l'élément chauffant supposée constante ;
- la valeur de la résistance de mesure R ;
- les constantes de temps T11 et T12 des sous-circuits RC 11 et 12.

Dans le mode de réalisation décrit ici, et de retour à la figure 1, les moyens de calcul 30 sont aptes à mesurer la tension U0 à la borne P de la batterie 3 au moyen d'une sonde de tension 6.

Dans le mode de réalisation décrit ici, les moyens de calcul 30 sont également aptes à estimer la résistivité R10(t1) de l'élément chauffant. Pour cela, les moyens de calcul 30 mesurent, à l'instant t1, les tensions U5 à la borne Q de l'interrupteur 5 au moyen d'une sonde de tension 7 et la tension U10 à la borne A de l'élément chauffant 10 au moyen d'une sonde de tension 8.

En notant i l'intensité du courant électronique qui traverse la résistance R, on obtient par application de la loi des nœuds à la borne A, et de la loi d'Ohm à la résistance R, on obtient i1 + i10 = (U5 - U10)/R.

Or, dans le mode de réalisation décrit ici, il est négligeable devant i10. Par conséquent, par application de la loi d'Ohm à l'élément chauffant 10 :

$$R10 = R.U10/(U5 - U10) \qquad (3)$$

Dans le mode de réalisation de l'invention décrit ici, la première base de données BD1 mémorise, pour une pluralité de six-uplet correspondant aux 6 paramètres {G, U0, R10, R, T11, T12}, des valeurs de la tension théorique $\Delta U10_{TH}(t)$ en l'absence d'inhalation et en régime transitoire à différents instants t comptés entre t1 et t1+800ms.

Les moyens de calcul sont donc en mesure de calculer l'intensité d'inhalation F par la méthode de Riemann.

Dans le mode de réalisation décrit ici, les moyens de calcul 30 interrogent une deuxième base de données BD2 de la cigarette électronique 1 pour déterminer la quantité de substrat vaporisée pendant la période de fumage en fonction de quatre paramètres :

- durée t4 - t1 de la période de fumage ;
- tension U0 de la batterie 3 mesurée par les moyens de calcul 30 ;
- résistance R10(t1) de l'élément chauffant 10, supposée constante au cours d'une période de fumage, et mesurée par les moyens de calcul 30 ; et
- intensité d'inhalation F, calculée ici par la méthode de Riemann.

En variante d'autres paramètres peuvent aussi être utilisés et notamment la température de l'élément chauffant 10 à t1, la viscosité du substrat, la vitesse d'évaporation du substrat, la fonction de transfert de l'élément chauffant 10 caractérisant son refroidissement, la densité de gouttes de substrat vaporisée en fonction de l'intensité d'inhalation F, ...

Dans le mode de réalisation décrit ici, la tension U0 de la batterie 3 est mesurée par les moyens de calcul 30. En variante, cette tension pourrait être considérée constante et égale à la valeur nominale de la batterie.

Description d'un deuxième mode de réalisation de l'invention

Dans le mode de réalisation de la figure 1, on utilise 2 sous-circuits RC série 11, 12 en série et un amplificateur 20 pour estimer la variation de tension $\Delta U10(t)$ aux bornes de l'élément chauffant 10.

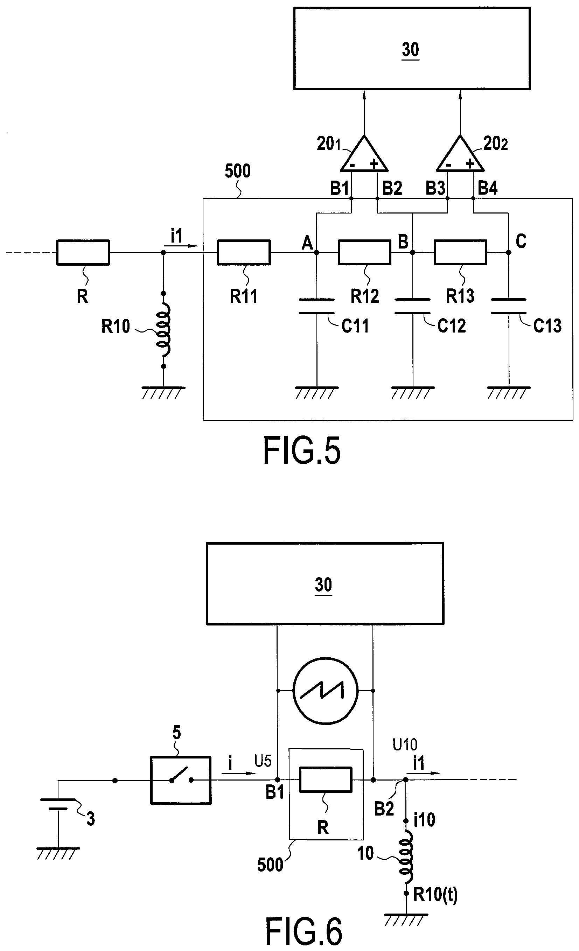

En variante, et comme représenté à la figure 5, on peut par exemple utiliser un circuit 500 comportant trois sous-circuits RC et deux amplificateurs $20_1$, $20_2$.

Dans ce mode de réalisation :

- le premier sous-circuit RC (R11/C11) suit de très près la tension aux bornes de l'élément chauffant R10 et représente une estimation de la tension aux bornes de l'élément chauffant R10(t) à l'instant t de la mesure ;

- le deuxième sous-circuit RC (R12/C12) suit avec un léger retard dt la tension aux bornes de l'élément chauffant R10 et représente une estimation de ce qu'était la tension R10(t-dt) aux bornes de l'élément chauffant R10 à un instant passé t-dt proche de l'instant t de la mesure ;

- le troisième sous-circuit RC (R13/C13) suit avec un retard plus important Dt la tension aux bornes de l'élément chauffant R10 et représente une estimation de ce qu'était la tension R10(t-Dt) aux bornes de l'élément chauffant R10 à un instant passé t-Dt plus éloigné de l'instant t de la mesure.

A cet effet, les constantes de temps des trois sous-circuits RC sont choisies de sorte que l'équation ci-dessous soit vérifiée :

$$R11.C11 < R12.C12 < R13.C13 \text{ ;}$$

De plus, pour un suivi plus fin, il peut être plus optimal d'avoir en plus l'équation suivante vérifiée :

$$(R11.C11) / (R12.C12) < (R12.C12) / (R13.C13)$$

Aucun des composants du circuit 500 n'a de caractéristique intrinsèque perturbée par les inhalations.

Dans ce mode de réalisation, le circuit 500 présente quatre bornes B1, B2, B3 et B4.

Comme dans le premier mode de réalisation, la quantité de substrat vaporisée pendant une période de fumage est estimée à partir d'une intensité d'inhalation F calculée par intégration de la différence au cours d'une période de fumage, entre l'approximation de la variation de la tension U10(t) aux bornes de l'élément chauffant 10 pendant cette période de fumage et l'estimation théorique $\Delta U10_{TH}(t)$ de cette approximation de cette variation de tension en l'absence de toute inhalation pendant la période de fumage.

Mais de façon très avantageuse, on réalise dans ce mode de réalisation, deux approximations $\Delta U10^1_{MES}(t)$ et $\Delta U10^2_{MES}(t)$ de la variation de la tension U10(t) aux bornes de l'élément chauffant 10 pendant la période de fumage, la première approximation étant mesurée aux bornes B1 et B2 du circuit 500, la deuxième approximation étant mesurée aux bornes B3 et B4 du circuit 500.

Ce mode de réalisation permet d'améliorer l'estimation des variations de tension aux bornes de l'élément chauffant 10, et ce quelles que soient les caractéristiques de la bouffée.

En effet, grâce au choix des constantes de temps :

- la tension mesurée aux bornes B1 et B2 du circuit 500 est particulièrement représentative de la tension aux bornes de l'élément chauffant R10 pour un certain type d'inhalation, par exemple une inhalation rapide et/ou intense ou saccadée; alors que
- la tension mesurée aux bornes B3 et B4 du circuit 500 est particulièrement représentative de la tension aux bornes de l'élément chauffant R10 pour un autre type d'inhalation, par exemple une inhalation lente et/ou légère ou continue.

On construit alors dans ce mode de réalisation les 2 courbes $\Delta U10_{MES}(t)$ et $\Delta U10_{TH}(t)$ suivantes :

$$- \Delta U10_{MES}(t) = K1\ \Delta U10^1_{MES}(t) + K2\ \Delta U10^2_{MES}(t)$$

$$- \Delta U10_{TH}(t) = K1\ \Delta U10^1_{TH}(t) + K2\ \Delta U10^2_{TH}(t)$$

dans lesquelles $\Delta U10^1_{TH}(t)$ et $\Delta U10^2_{TH}(t)$ sont des estimations théoriques des approximations $\Delta U10^1_{MES}(t)$ et $\Delta U10^2_{MES}(t)$ en l'absence de toute inhalation pendant la période de fumage.

On retient alors, pour calculer l'intensité F de l'inhalation, l'aire entre ces deux courbes $\Delta U10_{MES}$ et $\Delta U10_{TH}$.

Les coefficients K1 et K2 sont fixes et déterminés en fonction des constantes de temps des circuits RC (les valeurs R11.C11, R12.C12 et R13.C13).

De façon non limitative, ce couple de coefficients pourrait être choisi conformément à l'un des quatre exemples suivants :

Exemple 1 :

$$K1 = 1/2 \text{ ;}$$

$$K2 = 1/2$$

Exemple 2 :

$$K1 = (R11.C11+R12.C12)/(R11.C11+2.R12.C12+R13.C13) \;;$$

$$K2 = (R12.C12+R13.C13)/(R11.C11+2.R12.C12+R13.C13)$$

Exemple 3 :

$$K1 = R12.C12/(R11.C11) \,/\, ((R12.C12)/(R11.C11) + (R13.C13)/(R12.C12))$$

$$K2 = R13.C13/(R12.C12) \,/\, ((R12.C12)/(R11.C11) + (R13.C13)/(R12.C12))$$

Exemple 4 :

$$K1 = (R12.C12\text{-}R11.C11) \,/\, (R13.C13\text{-}R11.C11) \;;$$

$$K2 = (R13.C13\text{-}R12.C12) \,/\, (R13.C13\text{-}R11.C11)$$

Pour s'assurer une bonne exploitation, ces coefficients peuvent testés/validés en laboratoire.

Description d'un exemple qui ne fait pas partie de l'invention

Dans l'exemple de la figure 6, la grandeur de la tension aux bornes de l'élément chauffant que l'on estime n'est pas la variation $\Delta U10(t)$ de cette tension mais la valeur $U10(t)$ de cette tension elle-même.

Dans cet exemple, on estime cette valeur $U10(t)$ en mesurant la tension $U5 - U10$ aux bornes B1 et B2 d'un circuit 500 constitué dans cet exemple par la résistance de mesure R.

En effet, en reprenant l'équation (3) :

$$U10(t) = R10 \,/\, R \,.\, (U5 - U10) \,(t) \qquad (4)$$

Cet exemple nécessite de connecter des moyens de calcul 30 aux bornes B1 et B2 de la résistance de mesure R pour mesurer précisément les variations de U5-U10.

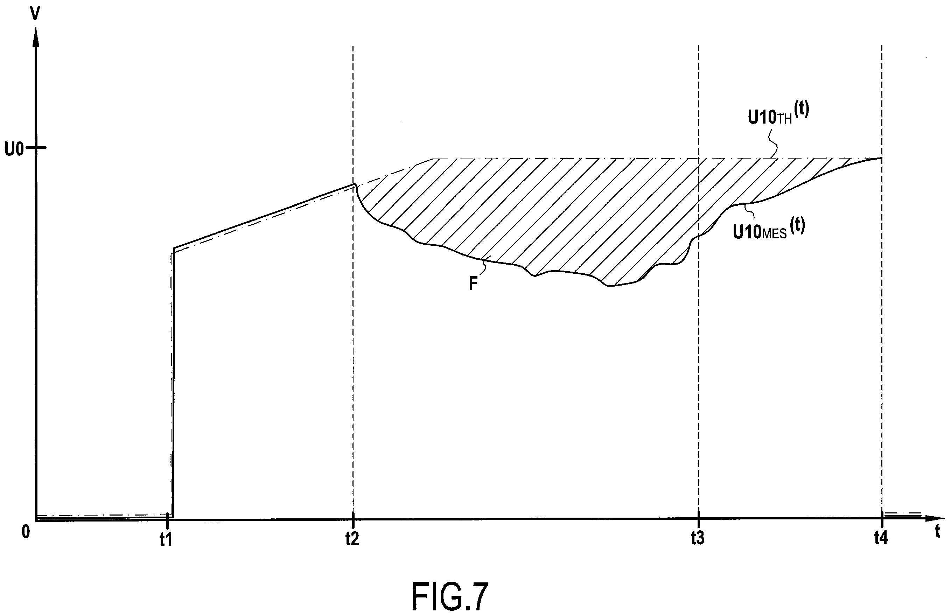

La figure 7 représente :

- l'approximation $U10_{MES}(t)$ de la tension $U10(t)$ aux bornes de l'élément chauffant 10 pendant la période de fumage, calculée en utilisant l'équation (4), la différence de $(U5 - U10)(t)$ étant la différence de potentiels mesurés par les moyens de calcul 30 de la figure 6 entre les points B1 et B2 ;
- l'estimation de l'approximation $U10_{TH}(t)$ aux bornes de l'élément chauffant 10 en l'absence d'inhalation pendant ladite période de fumage,
- l'intensité F de l'inhalation correspondant à l'intégration de la différence entre $U10_{MES}(t)$ et $U10_{TH}(t)$ pendant la période de fumage.

Description d'un autre exemple qui ne fait pas partie de l'invention

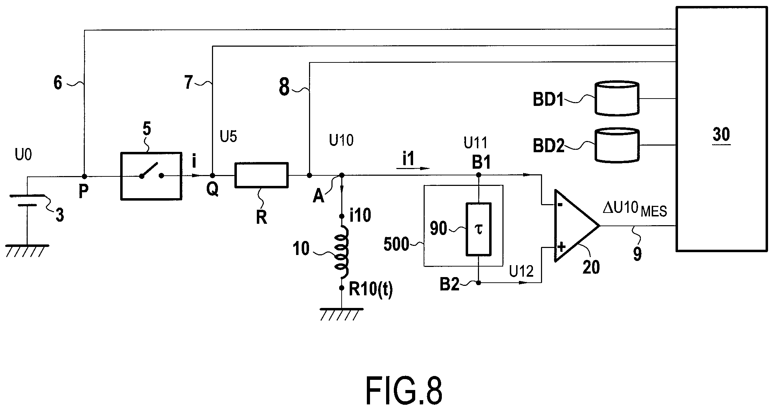

Dans un exemple représenté à la figure 8, pour estimer la variation $\Delta U_{MES}10(t)$ de la tension aux bornes de l'élément chauffant 10, on effectue, comme pour le premier mode de réalisation, la différence entre deux tensions $U12(t)$ et $U11(t)$ aux bornes B1 et B2 d'un circuit 500, chacune de ces tensions donnant une approximation de la tension aux bornes de l'élément chauffant (10) à des instants légèrement décalés dans le temps.

Dans cet exemple, on utilise, pour générer ce retard, un circuit 500 constitué par une ligne de retard 90 entre les points de mesure des tensions $U11(t)$ et $U12(t)$.

Cette ligne de retard peut par exemple être constituée par :

- une grande capacité ;
- un convertisseur analogique numérique couplé à un convertisseur numérique analogique.

Les caractéristiques intrinsèques de la ligne de retard 90 ne sont pas perturbées par les inhalations.

Description d'un autre exemple qui ne fait pas partie de l'invention

Dans un exemple, on peut aussi estimer la variation $\Delta U_{MES}10(t)$ de la tension aux bornes de l'élément chauffant 10, en calculant la dérivée par rapport au temps de la tension mesurée $\Delta U_{MES}10(t)$, comme dans le troisième mode de réalisation, avec le moyens de calcul 30 de la figure 6 entre les points B1 et B2.

Cette valeur peut être comparée avec la variation théorique $\Delta U_{TH}10(t)$ de la tension aux bornes de l'élément chauffant 10 en l'absence d'inhalation, comme dans le premier mode de réalisation.

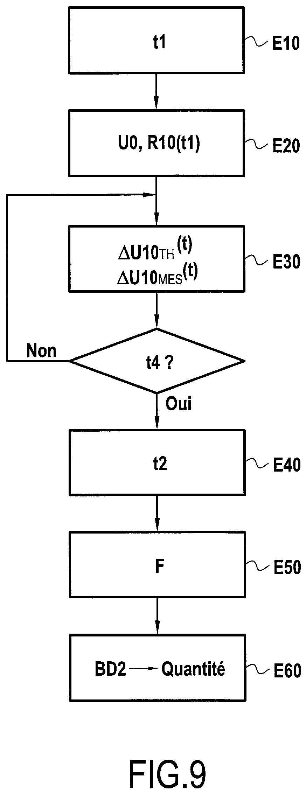

La figure 9 représente sous forme d'organigramme un procédé d'estimation de la quantité de substrat vaporisée selon un exemple qui ne fait pas partie de l'invention.

Ce procédé peut par exemple être mis en œuvre par les moyens de calcul 30 de la cigarette électronique de la figure 1.

Au cours d'une étape E10, les moyens de calcul 30 détectent l'appui sur le bouton entraînant la fermeture de l'interrupteur 5. L'instant t1 de cette détection est enregistré en mémoire.

Au cours d'une étape E20, juste après cette détection, les moyens de calcul 30 mesurent la tension U0 délivrée par la batterie 3 et la résistivité R10(t1) de l'élément chauffant.

Toutes les 20ms, au cours d'une étape E30, jusqu'à l'instant t4 de détection de la relâche du bouton entraînant l'ouverture de l'interrupteur 5, les moyens de calcul 30 :

- mesurent $\Delta U10_{MES}$ (t) (potentiel de la borne 9) ;
- estiment $\Delta U10_{TH}(t)$ par lecture de la première base de données BD1 entre t1 et t1+800ms. Entre t1+800ms et t4, ils estiment $\Delta U10_{TH}$ (t) = 0.

Au cours d'une étape E40, les moyens de calcul 30 estiment l'instant t2 du début de la bouffée, cet instant étant le premier instant après t1 tel que $| \Delta U10_{MES}$ (t2) - $\Delta U10_{TH}$ (t2) $| > S_{T2}$.

Au cours d'une étape E50, les moyens de calcul 30 calculent l'intensité F de l'inhalation comme l'intégration de la différence entre $\Delta U10_{MES}$ (t) et $\Delta U10_{TH}$ (t) entre t2 et t4.

Au cours d'une étape E60, les moyens de calcul 30 estiment la quantité de substrat vaporisé entre t2 et t4 en interrogeant la deuxième base de données B2.

**Revendications**

**1.** Cigarette électronique (1) comprenant:

un élément chauffant (10), apte à vaporiser un substrat, comportant une première borne reliée à la masse, et une deuxième borne (A) ;

une batterie (3), apte à délivrer un tension (U0) ;

un interrupteur (5) connecté à une borne (P) de la batterie (3) et configuré pour alimenter l'élément chauffant (10) à partir de la batterie (3) seulement lorsqu'un bouton est pressé ;

une résistance de mesure (R) placée en série entre une borne (Q) de l'interrupteur (5) et la deuxième borne (A) de l'élément chauffant (10) ;

des moyens de calcul (30) ;

les moyens de calcul (30) étant configurés pour mesurer une tension (U10) à la borne (A) de l'élément chauffant (10),

dans laquelle la cigarette comprend un circuit (500) comprenant un sous-circuit RC (11) ;

dans laquelle le sous-circuit RC (11) comprend une première résistance (R11) et une première capacité (C11) ;

le sous circuit RC (11) étant connecté avec l'élément chauffant (10) par la deuxième borne (A) de l'élément chauffant (10) ;

le circuit (500) étant configuré pour fournir aux moyens de calcul (30) une tension (U11) étant une approximation de la tension (U10) aux bornes de l'élément chauffant (10)

**caractérisée en ce que**

le circuit (500) comprend en outre une deuxième résistance (R12) connectée à un nœud qui connecte la première résistance (R11) et la première capacité (C11) en série,

dans laquelle le circuit (500) comprend en outre une deuxième capacité (C12) connectée à la masse, la deuxième résistance (R12) et la deuxième capacité (C12) formant un deuxième sous circuit (RC12), et

dans laquelle une constante de temps (T12) du deuxième sous circuit (RC12) est choisie supérieure à une constante de temps (T11) du premier circuit (RC11).

**2.** Cigarette électronique (1) selon la revendication 1, dans laquelle les moyens de calcul (30) sont configurés pour estimer une résistivité (R10(t1)) de l'élément chauffant (10) depuis la tension (U10) mesurée.

**3.** Cigarette électronique (1) selon la revendication 1 ou 2, comprenant :
une résistance (R11) comprenant une borne connectée avec la deuxième borne (A) de l'élément chauffant (10) et une borne opposée étant connectée avec les moyens de calcul (30) par une borne (9).

**4.** Cigarette électronique (1) selon la revendication 2 comprenant :

une première sonde de tension (7) connectée à la borne (Q) de l'interrupteur (5) ;
une deuxième sonde de tension (8) connectée à la deuxième borne (A) de l'élément chauffant (10) ;
dans laquelle les moyens de calcul (30) sont configurés pour estimer la résistivité (R10) de l'élément chauffant (10) à partir de la tension (U5) à la borne (Q) de l'interrupteur (5) mesurée par la première sonde de tension (7) et de la tension (U10) à la deuxième borne (A) de l'élément chauffant (10) mesurée par la deuxième sonde de tension (8).

**5.** Cigarette électronique (1) selon la revendication 1 ou 2, dans laquelle la constante de temps (T12) du deuxième sous circuit RC (12) est d'un facteur 100 supérieure à la constante de temps (T11) du sous circuit RC (11) comprenant la première résistance (R11) et la première capacité (C11).

**6.** Cigarette électronique (1) selon la revendication 1 ou 2, comprenant une sonde de tension (8) connectée à la deuxième borne (A) de l'élément chauffant (10) ;
dans laquelle les moyens de calcul (30) sont configurés pour mesurer la tension (U10) à la deuxième borne (A) de l'élément chauffant (10) par l'intermédiaire de la sonde de tension (8).

**7.** Cigarette électronique (1) selon la revendication 6, comprenant :

une première résistance (R11) connectée à l'élément chauffant (10) par la deuxième borne en parallèle,
une deuxième résistance (R12) connectée à la première résistance (R11) par un nœud en série.


**Patentansprüche**

**1.** Elektronische Zigarette (1), umfassend:

ein Heizelement (10), die geeignet ist, um ein Substrat zu verdampfen, umfassend einen ersten mit Masse verbundenen Anschluss und einen zweiten Anschluss (A);
eine Batterie (3), die geeignet ist um eine Spannung (U0) abzugeben;
einen Schalter (5), der mit einem Anschluss (P) der Batterie (3) verbunden und konfiguriert ist, um das Heizelement (10) anhand der Batterie (3) nur dann zu versorgen, wenn ein Knopf gedrückt wird;
einen Messwiderstand (R), der in Reihe zwischen einem Anschluss (Q) des Schalters (5) und dem zweiten Anschluss (A) des Heizelements (10) platziert ist;
Recheneinrichtungen (30),
wobei die Recheneinrichtungen (30) konfiguriert sind, um eine Spannung (U10) an dem Anschluss (A) des Heizelements (10) zu messen,
wobei die Zigarette eine Schaltung (500) umfasst, umfassend eine RC-Teilschaltung (11) umfasst;
wobei die RC-Teilschaltung (11) einen ersten Widerstand (R11) und eine erste Kapazität (C11) umfasst;
die RC-Teilschaltung (11) über den zweiten Anschluss (A) des Heizelements (10) mit dem Heizelement (10) verbunden ist;
die Schaltung (500) konfiguriert ist, um den Recheneinrichtungen (30) eine Spannung (U11) bereitzustellen, die eine Näherung der Spannung (U10) an den Anschlüssen des Heizelements (10) ist,
**dadurch gekennzeichnet, dass** die Schaltung (500) ferner einen zweiten Widerstand (R12) umfasst, der mit einem Knoten verbunden ist, der den ersten Widerstand (R11) und die erste Kapazität (C11) in Reihe verbindet,
wobei die Schaltung (500) ferner eine zweite mit Masse verbundene Kapazität (C12) umfasst, wobei der zweite Widerstand (R12) und die zweite Kapazität (C12) eine zweite Teilschaltung (RC12) bilden, und
wobei eine Zeitkonstante (T12) der zweiten Teilschaltung (RC12) größer gewählt ist als eine Zeitkonstante (T11) der ersten Schaltung (RC11.

**2.** Elektronische Zigarette (1) nach Anspruch 1, wobei die Recheneinrichtungen (30) konfiguriert sind, um einen Widerstandswert (R10(t1)) des Heizelements (10) aus der gemessenen Spannung (U10) zuschätzen.

**3.** Elektronische Zigarette (1) nach Anspruch 1 oder 2, umfassend:
einen Widerstand (R11), umfassend einen Anschluss, der mit dem zweiten Anschluss (A) des Heizelements (10) verbunden ist, und einen gegenüberliegenden Anschluss, der über einen Anschluss (9) mit den Recheneinrichtungen (30) verbunden ist.

**4.** Elektronische Zigarette (1) nach Anspruch 2, umfassend:

eine erste Spannungssonde (7), die mit dem Anschluss (Q) des Schalters (5) verbunden ist;
eine zweite Spannungssonde (8), die mit dem zweiten Anschluss (A) des Heizelements (10) verbunden ist;
wobei die Recheneinrichtungen (30) konfiguriert sind, um den Widerstandswert (R10) des Heizelements (10) anhand der Spannung (U5) an dem Anschluss (Q) des Schalters (5), gemessen durch die erste Spannungssonde (7), und der Spannung (U10) an dem zweiten Anschluss (A) des Heizelements (10), gemessen durch die zweite Spannungssonde (8), zu schätzen.

**5.** Elektronische Zigarette (1) nach Anspruch 1 oder 2, wobei die Zeitkonstante (T12) der zweiten RC-Teilschaltung (12) um einen Faktor 100 größer ist als die Zeitkonstante (T11) der RC-Teilschaltung (11), umfassend den ersten Widerstand (R11) und die erste Kapazität (C11).

**6.** Elektronische Zigarette (1) nach Anspruch 1 oder 2, umfassend eine Spannungssonde (8), die mit dem zweiten Anschluss (A) des Heizelements (10) verbunden ist,
wobei die Recheneinrichtungen (30) konfiguriert sind, um die Spannung (U10) an dem zweiten Anschluss (A) des Heizelements (10) mittels der Spannungssonde (8) zu messen.

**7.** Elektronische Zigarette (1) nach Anspruch 6, umfassend:

einen ersten Widerstand (R11), der über den zweiten Anschluss parallel mit dem Heizelement (10) verbunden ist,
einen zweiten Widerstand (R12), der über einen Knoten mit dem ersten Widerstand (R11) in Reihe verbunden ist.


**Claims**

**1.** An electronic cigarette (1) comprising:

a heating element (10), suitable for vaporizing a substrate, comprising a first terminal connected to ground, and a second terminal (A);
a battery (3), suitable for delivering a voltage (U0);
a switch (5) connected to a terminal (P) of the battery (3) and configured to supply the heating element (10) from the battery (3) only when a button is pressed;
a measurement resistor (R) placed in series between a terminal (Q) of the switch (5) and the second terminal (A) of the heating element (10);
computing means (30),
the computing means (30) being configured to measure a voltage (U10) at the terminal (A) of the heating element (10),
wherein the cigarette comprises a circuit (500) comprising an RC sub-circuit (11);
wherein the RC sub-circuit (11) comprises a first resistor (R11) and a first capacitor (C11);
the RC sub-circuit (11) being connected to the heating element (10) by the second terminal (A) of the heating element (10);
the circuit (500) being configured to provide to the computing means (30) a voltage (U11) being an approximation of the voltage (U10) across the heating element (10)
**characterized in that** the circuit (500) further comprises a second resistor (R12) connected to a node which connects the first resistor (R11) and the first capacitor (C11) in series,
wherein the circuit (500) further comprises a second capacitor (C12) connected to ground, the second resistor (R12) and the second capacitor (C12) forming a second sub-circuit (RC12), and
wherein a time constant (T12) of the second sub-circuit (RC12) is selected to be greater than a time constant (T11) of the first circuit (RC11).

2. The electronic cigarette (1) of claim 1, wherein the computing means (30) are configured to estimate a resistivity (R10(t1)) of the heating element (10) from the measured voltage (U10).

3. The electronic cigarette (1) of claim 1 or 2, comprising:
a resistor (R11) comprising one terminal connected to the second terminal (A) of the heating element (10) and an opposite terminal being connected to the computing means (30) by a terminal (9).

4. The electronic cigarette (1) of claim 2 comprising:

a first voltage probe (7) connected to the terminal (Q) of the switch (5); a second voltage probe (8) connected to the second terminal (A) of the heating element (10);
wherein the computing means (30) are configured to estimate the resistivity (R10) of the heating element (10) from the voltage (U5) at the terminal (Q) of the switch (5) measured by the first voltage probe (7) and from the voltage (U10) at the second terminal (A) of the heating element (10) measured by the second voltage probe (8).

5. The electronic cigarette (1) of claim 1 or 2, wherein the time constant (T12) of the second RC sub-circuit (12) is greater by a factor of 100 than the time constant (T11) of the RC sub-circuit (11) comprising the first resistor (R11) and the first capacitor (C11).

6. The electronic cigarette (1) of claim 1 or 2, comprising a voltage probe (8) connected to the second terminal (A) of the heating element (10),
wherein the computing means (30) are configured to measure the voltage (U10) at the second terminal (A) of the heating element (10) by means of the voltage probe (8).

7. The electronic cigarette (1) of claim 6, comprising:

a first resistor (R11) connected to the heating element (10) by the second terminal in parallel,
a second resistor (R12) connected to the first resistor (R11) by a node in series.

FIG.1

FIG.2

14

FIG.3

EP 4 104 691 B1

FIG.4

EP 4 104 691 B1

FIG.5

FIG.6

FIG.7

EP 4 104 691 B1

FIG.8

```
┌─────────────────────┐
│                     │
│         t1          │ ⌇ E10
│                     │
└─────────────────────┘
           │
           ▼
┌─────────────────────┐
│                     │
│      U0, R10(t1)    │ ⌇ E20
│                     │
└─────────────────────┘
           │
           ▼
┌─────────────────────┐
│        ΔU10TH (t)   │
│                     │ ⌇ E30
│        ΔU10MES(t)   │
└─────────────────────┘
           │
           ▼
        ╱──────╲
  Non  ╱         ╲
  ◄───        t4 ?
       ╲         ╱
        ╲──────╱
           │ Oui
           ▼
┌─────────────────────┐
│                     │
│         t2          │ ⌇ E40
│                     │
└─────────────────────┘
           │
           ▼
┌─────────────────────┐
│                     │
│         F           │ ⌇ E50
│                     │
└─────────────────────┘
           │
           ▼
┌─────────────────────┐
│                     │
│  BD2 ──► Quantité   │ ⌇ E60
│                     │
└─────────────────────┘
```

# FIG.9

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2468116 A
- EP 2143346 A1
- US 2003033055 A1